# EUROPEAN PATENT APPLICATION

(11) **EP 2 163 937 A1**
(43) Date of publication of application: **17.03.2010**
(21) Application number: 09252158.2
(22) Date of filing: 11.09.2009
(51) Int. Cl.: G02B 27/01, G06F 3/00

(54) **Head mount display**

(30) Priority: 11.09.2008 JP 2008233853
(71) Applicant: Brother Kogyo Kabushiki Kaisha, Nagoya-shi, Aichi 467-8561 (JP)
(72) Inventor: Watanabe, Mitsuyoshi, Nagoya-shi, Aichi 467-8561 (JP); Yamada, Shoji, Nagoya-shi, Aichi 467-8561 (JP); Taki, Kazunari, Nagoya-shi, Aichi 467-8561 (JP); Ueno, Hideo, Nagoya-shi, Aichi 467-8561 (JP)
(74) Representative: Smith, Samuel Leonard

(57) **Abstract**

A see-through-type head mount display includes a display unit which is configured to project an image light corresponding to display information on an eye of a viewer thus allowing the viewer to visually recognize an image corresponding to the image light while allowing an external light to pass therethrough. The head mount display determines a distribution state of identifying objects within a detected imaging region, and decides a display mode of associated information which is associated with the respective identifying objects corresponding to a distribution state of the identifying objects. Further, the head mount display performs a control such that a display unit performs a display of the associated information which is associated with the identifying objects in the decided mode in association with the identifying objects viewable by a viewer in a see-through manner through the display unit.

## Description

### TECHNICAL FIELD

The present invention relates to a head mount display, and more particularly to a see-through-type head mount display which allows transmission of an external light therethrough and projects an image light corresponding to content information to an eye of a viewer.

### BACKGROUND ART

Conventionally, there has been known an information processing device which includes a memory unit for storing various content information such as moving image files, still image files and text files, and a reproducing unit which reproduces the content information stored in the memory unit.

A typical example of such an information processing device is a personal computer. In general, the personal computer is constituted of a computer body provided with a memory unit, a reproducing unit and the like, a mechanical operating unit such as a keyboard or a mouse which a user operates to allow a computer body to perform predetermined operations, a display which displays the content information reproduced by the reproducing unit as an image, and the like.

As the display which displays the display information, a display device which is used in a state where the display device is placed on a table such as a CRT (Cathode Ray Tube) display or a liquid crystal display has been known in general. However, there has been also developed a head mount display (HMD) which allows a viewer to observe an image in a state where the HMD is put on his/her head using a liquid crystal display device as an image display device.

However, recently, there has been also developed a display which includes an optical scanning part which scans an image light formed based on image signals (hereinafter referred to as "image light") two-dimensionally and guides a scanned light to an eye of the viewer, wherein when a viewer operates the optical scanning part with a head mount display put on his/her head, the image light scanned two-dimensionally is projected and displayed on a retina of the viewer thus allowing the viewer to observe an image.

As such an HMD, a see-through-type HMD which allows a viewer to observe an external visual field in a see-through manner is named. As such a see-through type HMD, for example, JP-2003-242168 discloses a device in which infrared rays are radiated to an identifying object such as a notice, an identifying object ID or the like is acquired due to the reflection of the infrared rays, and content information associated with the identifying object is displayed in association with the identifying object in an overlapping manner based on the identifying object ID or the like.

### DISCLOSURE OF THE INVENTION

### PROBLEMS THAT THE INVENTION IS TO SOLVE

In the above-mentioned conventional device, when the identifying object is detected, content information associated with the identifying object (hereinafter also referred to as associated information) is displayed. However, when a large number of identifying objects are detected, in displaying all display information associated with the identifying objects in detail, since there is no sufficient display region, there exists a possibility that these display information overlap with each other thus making the viewing of the display information difficult. Accordingly, there has been a demand for the enhancement of convenience of the device.

The present invention has been made in view of the above-mentioned drawbacks, and it is an object of the present invention to provide a head mount display which can display easily-viewable necessary and sufficient display information even when a large number of identifying objects are detected.

According to one aspect of the present invention, there is provided a see-through-type head mount display which includes: a display unit which is configured to project an image light corresponding to display information on an eye of a viewer thus allowing the viewer to visually recognize an image corresponding to the image light while allowing an external light to pass therethrough; an imaging unit which is configured to photograph at least a portion of a visual field range of the viewer; an identifying object detection unit which is configured to detect identifying objects within an imaging region formed by the imaging unit; an associated information memory unit which is configured to store associated information associated with the respective identifying objects; a distribution state determination unit which is configured to determine a distribution state of the identifying objects within the imaging region which are detected by the identifying object detection unit; a display mode decision unit which is configured to decide a display mode of the associated information associated with the respective identifying objects corresponding to the distribution state of the identifying objects determined by the distribution state determination unit; and a display control unit which is configured to perform a control in which the associated information associated with the identifying objects are displayed by the display unit in association with the identifying objects viewable by the viewer through the display unit in the display mode decided by the display mode decision unit.

In the head mount display having the above-mentioned constitution, the head mount display may further include a distribution density calculation unit which is configured to calculate distribution density of identifying objects within the imaging region detected by the identifying object detection unit, and the display mode decision unit may decide the display mode of the associated information associated with the respective identifying objects based on the distribution density of the identifying objects calculated by the distribution density calculation unit.

In the head mount display having the above-mentioned constitution, the head mount display may further include a display position decision unit which is configured to decide, around identifying objects detected by the identifying object detection unit, a position where the distribution density of the identifying objects calculated by the distribution density calculation unit is relatively low as a position for displaying the associated information associated with the respective identifying objects.

In the head mount display having the above-mentioned constitution, the head mount display may include a display position decision unit which is configured to decide, around identifying objects detected by the identifying object detection unit, a position between the identifying object and another identifying object remotest from the identifying object as a position for displaying the associated information associated with the identifying object.

In the head mount display having the above-mentioned constitution, the display mode decision unit may decide any one of a pattern, a character, a still image and a moving image indicative of the associated information associated with the identifying object as a display mode corresponding to the distribution state of the identifying objects.

In the head mount display having the above-mentioned constitution, the display mode decision unit may decide a display size of the associated information associated with the identifying object as the display mode corresponding to the distribution state of the identifying objects.

In the head mount display having the above-mentioned constitution, the display mode decision unit may decide a display mode of the associated information associated with the identifying object based on a kind of the identifying objects detected by the identifying object detection unit.

In the head mount display having the above-mentioned constitution, the display mode decision unit may decide a display mode of the identifying objects present in a region near the center of a visual field range of the viewer out of the identifying objects detected by the identifying object detection unit as a relatively easily viewable display mode.

In the head mount display having the above-mentioned constitution, the display mode decision unit, when displacement of the identifying object is detected by the identifying object detection unit, may maintain a display mode immediately before displacement for a predetermined time.

In the head mount display having the above-mentioned constitution, the display mode decision unit, when displacement of the identifying object is detected by the identifying object detection unit, may decide a display mode of associated information associated with the identifying object based on the positional distribution of the identifying objects within the imaging region detected after the displacement.

According to the present invention, the head mount display can display content information in an easily viewable manner even when a large number of identifying images are detected.

### BRIEF DESCRIPTION OF THE DRAWINGS

Fig. 1 is an explanatory view showing an HMD system according to one embodiment of the present invention;
Fig. 2 is an explanatory view showing the electrical and optical constitution of the HMD 1 according to one embodiment of the present invention;
Fig. 3 is an explanatory view showing the functional constitution of the HMD 1 according to one embodiment of the present invention;
Fig. 4 is an explanatory view showing one example of a display mode decision table;
Fig. 5 is an explanatory view showing display contents or the like of the HMD 1 according to one embodiment of the present invention;
Fig. 6 is a flowchart showing one example of processing executed when a control part of the HMD performs a control;
Fig. 7 is a flowchart showing one example of processing executed when a control part of the HMD performs a control;
Fig. 8 is an explanatory view showing display contents or the like of an HMD according to one embodiment of the present invention;
Fig. 9 is an explanatory view showing display content or the like of an HMD according to one embodiment of the present invention; and
Fig. 10 is an explanatory view showing the electrical constitution of the HMD 1 according to one embodiment of the present invention.

### BEST MODE FOR CARRYING OUT THE INVENTION

Hereinafter, an embodiment of the present invention is explained specifically in conjunction with drawings.

### [Overall appearance of HMD]

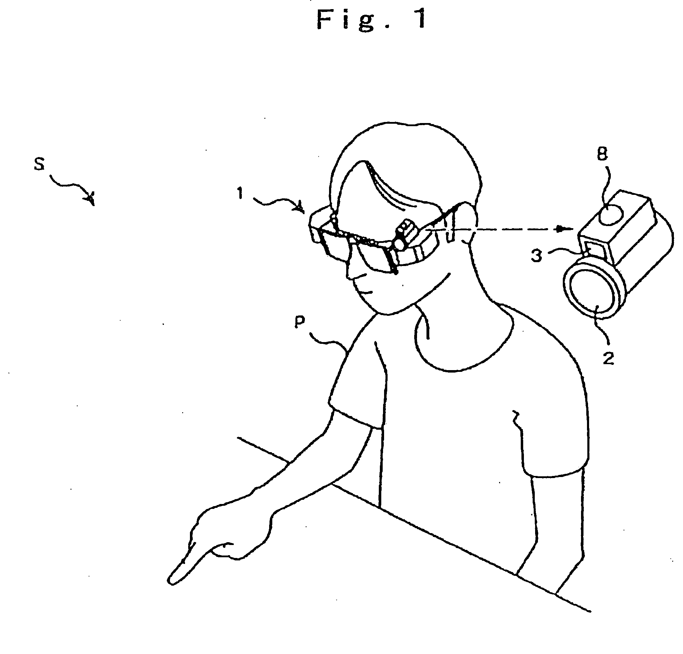

As shown in Fig. 1, a head mount display (hereinafter referred to as "HMD") system S according to this embodiment includes, in a state where the HMD is put on a head of a viewer P, an HMD 1 which displays various content information such as moving image files, still image files and text files as images in a state where the viewer P can observe the content information.

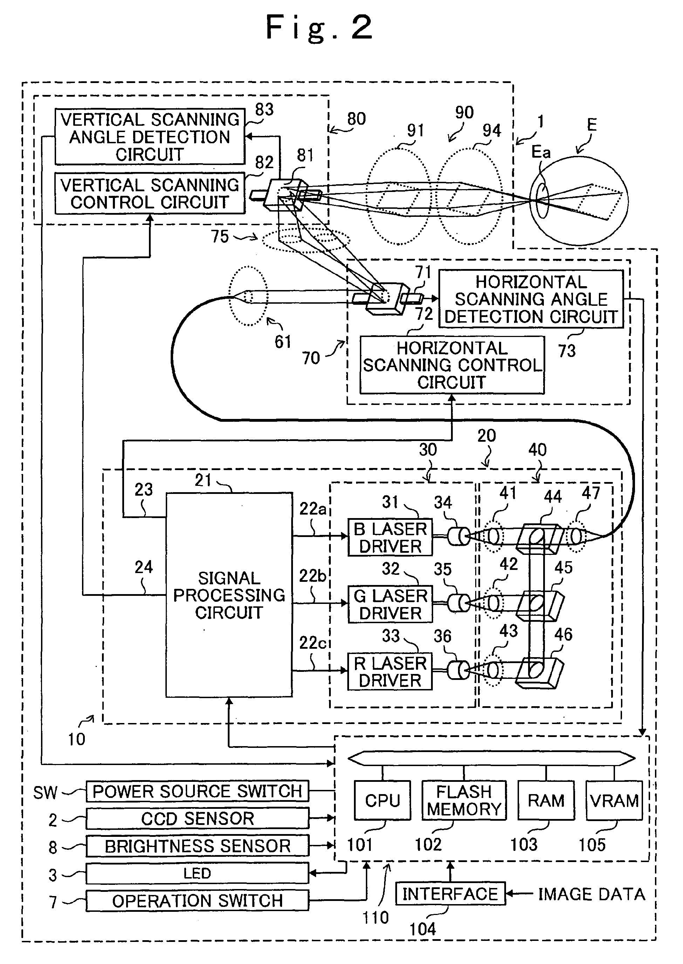

The HMD 1 is configured as follows. That is, the HMD 1 includes an optical scanning part 10 (see Fig. 2) which converts internally or externally stored various content information into image signals, and performs scanning of an image light generated based on the image signals (hereinafter referred to as "image light") by guiding the image light to an eye of the viewer P. By operating the optical scanning part 10 in a state where the HMD 1 is put on the head of the viewer P, scanning of the image light is performed on a retina of the viewer in two-dimensional directions thus allowing the viewer P to observe an image corresponding to the content information (hereinafter simply referred to as "content"). The specific constitution of the HMD 1 is explained in detail later.

Further, the HMD 1 is configured, even in the midst of the display of the content, to allow the viewer P to observe an external field in regions except for a region where the content is displayed within a visual field of the viewer P.

That is, the HMD 1 is a see-through-type head mount display which projects an image light corresponding to content information to an eye of the viewer P while allowing the transmission of external light therethrough.

The HMD system S is also configured to detect an identifying object such as a two-dimensional code (for example, a QR code), and to instruct the HMD I to perform a display control for displaying content information associated with the identifying object. Accordingly, content information associated with the identifying object may be also referred to as "associated information" hereinafter.

That is, the HMD 1 of this embodiment includes a CCD (Charge Coupled Device) sensor 2 which constitutes an imaging unit for photographing at least a portion of a region of a visual field of the viewer P. Provided that identifying objects are present in an imaging region of the CCD sensor 2, the HMD 1 selects content information associated with the identifying objects from plural kinds of content information, and displays the selected content information.

Particularly, in this embodiment, a predetermined number of content information is selectively displayed from the content information associated with the detected identifying objects and hence, even when a large number of identifying objects are detected, it is possible to display the content information in an easily viewable manner in terms of the display region.

Here, as shown in Fig. 1, the HMD 1 includes a brightness sensor 8 which detects brightness of surroundings, and an LED (Light Emitting Diode) 3 which constitutes an illuminating unit for illuminating the imaging region of the CCD sensor 2. When the brightness sensor 8 detects that the brightness of the surroundings becomes lower than the predetermined brightness, the LED 3 illuminates the imaging region of the CCD sensor 2.

### [Electrical constitution of HMD]

Here, the electrical constitution and the like of the HMD 1 according to this embodiment are explained in conjunction with Fig. 2.

As shown in Fig. 2, the HMD 1 includes the control part 110 which performs a systematic control of the operation of the whole HMD 1, and the optical scanning part 10 which allows the viewer P to observe an image corresponding to image signals by scanning two-dimensionally an image light formed based on image signals supplied from the control part 110 thus displaying the image.

The optical scanning part 10 includes an image light generating part 20 which reads out an image signal supplied from the control part 110 for every dot clock, and generates and radiates an image light whose intensity is modulated corresponding to the read image signal. Further, the optical scanning part 10 includes, between the image light generating part 20 and an eye E of the viewer P, a collimation optical system 61 which collimates the laser beams (image light) which are generated by the image light generating part 20 and are radiated via an optical fiber 100, a horizontal scanning part 70 which functions as a first optical scanning part for scanning the image light collimated by the collimation optical system 61 in a horizontal direction (first direction) in a reciprocating manner for an image display, a vertical scanning part 80 which functions as a second optical scanning part for scanning the image light scanned in the horizontal direction using the horizontal scanning part 70 in a vertical direction (second direction substantially orthogonal to the first direction) in a reciprocating manner, a relay optical system 75 which is arranged between the horizontal scanning part 70 and the vertical scanning part 80, and a relay optical system 90 which radiates the image light scanned in the horizontal direction as well as in the vertical direction (scanned two-dimensionally) onto the pupil Ea of the viewer P.

Further, the image light generating part 20 includes a signal processing circuit 21. Image data supplied from an external device such as a personal computer (not shown in the drawing) is inputted to the signal processing circuit 21 via an interface 104 and a control part 110. Based on the image data, the signal processing circuit 21 generates respective signals and the like which constitute components for synthesizing an image. The respective image signals 22a to 22c of blue (B), green (G) and red (R) are generated and outputted by the signal processing circuit 21. Further, the signal processing circuit 21 outputs a horizontal drive signal 23 used in the horizontal scanning part 70 and a vertical drive signal 24 used in the vertical scanning part 80 respectively.

Further, the image light generating part 20 includes a light source part 30 which functions as an image light output part for forming three image signals (B, G , R) 22a to 22c outputted from the signal processing circuit 21 for respective dot clocks into image lights respectively, and an optical synthesizing part 40 which generates an arbitrary image light by combining these three image lights into one image light.

The light source part 30 includes a B laser 34 which generates a blue image light, a B laser driver 31 which drives the B laser 34, a G laser 35 which generates a green image light, a G laser driver 32 which drives the G laser 35, an R laser 36 which generates a red image light, and an R laser driver 33 which drives the R laser 36. Here, each laser 34, 35, 36 may be constituted of a semiconductor laser or a solid-state laser provided with a harmonic generating mechanism, for example. Here, when the semiconductor laser is used as the laser 34, 35, 36, the intensity of the image light may be modulated by directly modulating a drive current, while when the solid laser is used as the laser 34, 35, 36, it is necessary to modulate the intensity of the image light by providing an external modulator to each laser 34, 35, 36.

The optical synthesizing part 40 includes collimation optical systems 41, 42, 43 provided for collimating the image lights incident from the light source part 30 into parallel image lights, dichroic mirrors 44, 45, 46 provided for synthesizing the collimated image lights, and a coupling optical system 47 which guides the synthesized image light to the optical fiber 100.

The laser beams radiated from the respective lasers 34, 35, 36 are, after being collimated by the collimation optical systems 41, 42, 43 respectively, incident on the dichroic mirrors 44, 45, 46. Thereafter, the respective image lights are selectively reflected on or are allowed to pass through these dichroic mirrors 44, 45, 46 corresponding to wavelengths thereof.

To be more specific, the blue image light radiated from the B laser 34 is, after being collimated by the collimation optical system 41, incident on the dichroic mirror 44. The green image light radiated from the G laser 35 is incident on the dichroic mirror 45 via the collimation optical system 42. The red image light radiated from the R laser 36 is incident on the dichroic mirror 46 via the collimation optical system 43.

The image lights of three primary colors which are respectively incident on these three dichroic mirrors 44, 45, 46 are reflected on the dichroic mirrors 44, 45, 46 or are allowed to pass through the dichroic mirrors 44, 45, 46 selectively corresponding to wavelengths thereof, and arrive at the coupling optical system 47 and are converged by the coupling optical system. Then, the converged image lights are outputted to the optical fiber 100.

The horizontal scanning part 70 and the vertical scanning part 80, to bring the image lights incident from the optical fiber 100 into a state which allows the image lights to be projected as an image, scan the image lights in a horizontal direction as well as in a vertical direction to form scanned image lights.

The horizontal scanning part 70 includes a resonance-type polarizing element 71 which includes a reflective surface for scanning the image light in the horizontal direction, a horizontal scanning control circuit 72 which constitutes a drive signal generator for generating a drive signal which oscillates the reflective surface of the resonance-type polarizing element 71 by allowing the resonance-type polarizing element 71 to generate resonance, and a horizontal scanning angle detecting circuit 73 which detects an oscillation state such as an oscillation range and an oscillation frequency of the reflective surface of the resonance-type polarizing element 71 based on a displacement signal outputted from the resonance-type polarizing element 71.

In this embodiment, the horizontal scanning angle detecting circuit 73 is configured to input a signal indicative of the detected oscillation state of the resonance-type polarizing element 71 to the control part 110.

The vertical scanning part 80 includes a polarizing element 81 for scanning the image light in the vertical direction, a vertical scanning control circuit 82 for driving the polarizing element 81, and a vertical scanning angle detecting circuit 83 for detecting an oscillation state such as an oscillation range and an oscillation frequency of the reflective surface by the vertical scanning control circuit 82.

Further, the horizontal scanning control circuit 72 and the vertical scanning control circuit 82 are respectively driven based on a horizontal drive signal 23 and a vertical drive signal 24 outputted from the signal processing circuit 21, and the vertical scanning angle detecting circuit 83 inputs a signal indicative of the detected oscillation state of the polarizing element 81 to the control part 110.

Then, the control part 110 described in detail later adjusts the horizontal drive signal 23 and the vertical drive signal 24 by controlling the operation of the signal processing circuit 21 thus allowing the horizontal scanning part 70 and the vertical scanning part 80 to change the scanning angles of the image light whereby the brightness of the image to be displayed can be adjusted.

The scanning angles changed in this manner are detected by the control part 110 based on detection signals from the horizontal scanning angle detecting circuit 73 and the vertical scanning angle detecting circuit 83, and are fed back to the horizontal drive signal 23 via the signal processing circuit 21 and the horizontal scanning control circuit 72 and, at the same time, are fed back to the vertical drive signal 24 via the signal processing circuit 21 and the vertical scanning control circuit 82.

Further, the HMD 1 includes a relay optical system 75 for relaying the image light between the horizontal scanning part 70 and the vertical scanning part 80. The light scanned in the horizontal direction by the resonance-type polarizing element 71 is converged on the reflective surface of the polarizing element 81 by the relay optical system 75, is scanned in the vertical direction by the polarizing element 81, and is radiated to a relay optical system 90 as a scanned image light which is scanned two-dimensionally.

The relay optical system 90 includes lens systems 91, 94 having a positive refractive power. The scanned image lights for display which are radiated from the vertical scanning part 80, using the lens system 91, have center lines thereof respectively arranged approximately parallel to each other and are respectively converted into converged image lights. Then, using the lens system 94, the converged image lights are arranged approximately parallel to each other and, at the same time, are converted such that the center lines of these image lights are converged on a pupil Ea of the viewer. Although not shown in the drawing, a half mirror is arranged in front of an eye of the viewer P. The image light from the relay optical system 90 is reflected on the half mirror and is incident on the pupil Ea of the viewer P, while an external light passes through the half mirror and is incident on the pupil Ea of the viewer P. In this manner, by allowing the viewing of an image formed of the image light in a state that the image overlaps with ambient scenery, it is possible to provide the see-through-type image display device.

In this manner, the HMD1 optically guides the image corresponding to the display information and the ambient scenery into the eye of viewer P, and allows the viewer P to see the image corresponding to the display information in a state that the image corresponding to the display information overlaps with the ambient scenery.

Here, according to this embodiment, the image light incident from the optical fiber 100 is scanned in the horizontal direction by the horizontal scanning part 70 and, thereafter, is scanned in the vertical direction by the vertical scanning part 80. However, the arrangement of the horizontal scanning part 70 and the arrangement of the vertical scanning part 80 may be exchanged such that the image light may be scanned in the vertical direction by the vertical scanning part 80 and, thereafter, may be scanned in the horizontal direction by the horizontal scanning part 70.

Further, the control part 110 includes a CPU (Central Processing Unit) 101, a flash memory 102 which is a non-volatile memory and constitutes a ROM (Read Only Memory), a RAM (Random Access Memory) 103, and a VRAM (Video Random Access Memory) 105 which stores image data to be displayed.

The CPU 101, the flash memory 102, the RAM 103 and the VRAM 105 are respectively connected to a bus for data communication, and the transmission and reception of various information are performed via the bus for data communication.

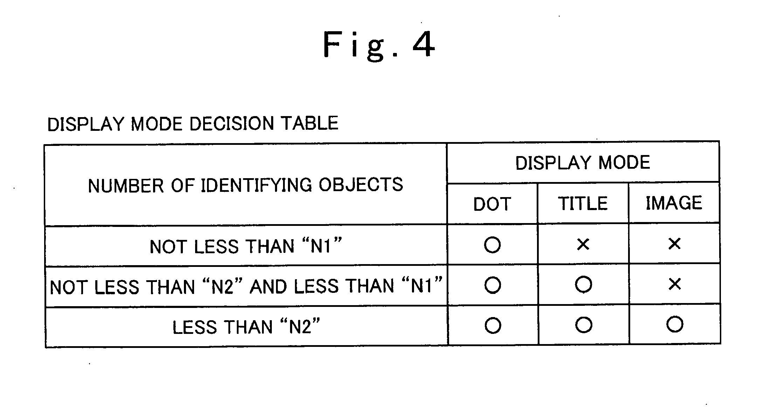

Further, the control part 110 is also connected with a power source switch SW of the HMD 1, the CCD sensor 2 which photographs an image including identifying objects, a brightness sensor 8 which detects brightness (luminance) of surroundings, an LED 3 which illuminates the imaging region A (see Fig. 4) of the CCD sensor 2 when the brightness sensor 8 detects that the brightness of surroundings becomes lower than the predetermined brightness, an operation switch 7 which is operable by the viewer, and an interface 104 which is connectable with an external device such as a personal computer.

The CPU 101 is an arithmetic processing device which executes various information processing programs stored in the flash memory 102, causing them to operate various circuits not shown in the drawing which constitute the HMD 1 and to execute various functions provided to the HMD 1.

The flash memory 102 stores various information processing programs executed by the CPU 101 for allowing the control part 110 to perform a systematic control of the operation of the whole HMD 1. That is, the flash memory 102 stores information processing programs for operating the image light generating part 20, the horizontal scanning part 70, the vertical scanning part 80 and the like at the time of performing the display control such as reproduction, stop, fast-feeding and rewinding of the content to be displayed by the HMD 1.

Further, the flash memory 102 stores plural kinds of tables which the control part 110 references in performing various display controls including the table which the control part 110 uses for determining the configuration of the identifying object photographed by the CCD sensor 2.

### [Constitution and functions of HMD]

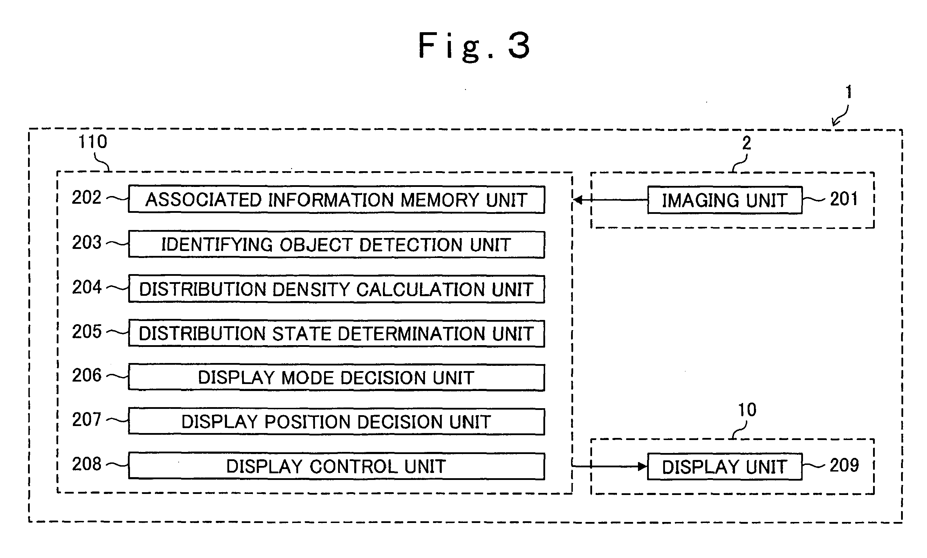

Here, the constitution and functions of the HMD 1 and the like according to this embodiment are explained in conjunction with Fig. 3.

As shown in Fig. 3, the CCD sensor 2 of the HMD 1 includes an imaging unit 201. The imaging unit 201 photographs at least a portion of a visual field range of a viewer. Then, the imaging unit 201 supplies the imaging data to a control part 110.

The control part 110 of the HMD 1 includes an associated information memory unit 202, an identifying object detection unit 203, a distribution density calculation unit 204, a distribution state determination unit 205, a display mode decision unit 206, a display position decision unit 207, and a display control unit 208. The control part 110 of the HMD 1 functions, due to the execution of predetermined information processing programs by a CPU 101 described later, as the identifying body detection unit 203, the distribution density calculation unit 204, the distribution state determination unit 205, the display mode decision unit 206, the display position decision unit 207, and the display control unit 208.

The above-mentioned flash memory 102 corresponds to the associated information memory unit 202, and stores content information associated with the respective identifying objects (associated information). Further, depending on kinds of identifying objects, plural kinds of content information is associated with the identifying objects as content information associated with the respective identifying objects. As these plural kinds of content information, for example, patterns, characters, still images, moving images indicative of content information associated with the respective identifying objects are named.

The identifying object detection unit 203 detects identifying objects from image data within an imaging region formed by the imaging unit 201.

The distribution density calculation unit 204 calculates the distribution density of identifying objects within the imaging region detected by the identifying object detection unit 203.

The distribution state determination unit 205 determines a distribution state of the identifying objects within the imaging region detected by the identifying object detection unit 203.

The display mode decision unit 206 decides display modes of associated information which are associated with the respective identifying objects corresponding to a distribution state of the identifying objects determined by the distribution state determination unit 205. In other words, the display mode decision unit 206 decides, based on the distribution density of identifying objects calculated by the distribution density calculation unit 204, the display modes of the associated information which are associated with the respective identifying objects. Further, the display mode decision unit 206 decides, as the display mode of the associated information, any one of patterns, characters, still images and moving images, for example.

The display position decision unit 207 decides positions where the associated information which is associated with the respective identifying objects detected by the identifying object detection unit 203 is displayed.

The display control unit 208 performs a control in which the content information associated with the identifying object detected by the identifying object detection unit 203 is displayed in the display mode decided by the display mode decision unit 206. Particularly, the display control unit 208 performs a control in which the content information associated with the identifying objects is displayed by the display unit 209 in association with the identifying objects observed by a viewer through the display unit 209 in the decided display mode.

The optical scanning part 10 of the HMD I includes a display unit 209. The display unit 209, while allowing an external light to pass through the display unit 209, projects an image light corresponding to image information (display information) to an eye of the viewer such that a viewer can observe an image corresponding to the image light.

### [Display mode decision table]

A display mode decision table stored in the flash memory 102 is explained hereinafter in conjunction with Fig. 4.

The display mode decision table shown in Fig. 4 is stored in the above-mentioned flash memory 102. The display mode decision table is a table for deciding a display mode of content information associated with identifying objects detected within the imaging region.

In the display mode decision table, the number of identifying objects detected in the imaging region and display modes are associated with each other. The display modes include a dot display mode, a title display mode, and an image display mode. Although explained in detail later, the image display mode includes a still image display mode and a moving image display mode.

To be more specific, in this display mode decision table, the dot display mode is selected when the number of identifying objects is not less than "N1", either one of the dot display mode and the title display mode is selected when the number of identifying objects is not less than "N2" and less than "N1", and any one of the dost display mode, the title display mode and the image display mode is selected when the number of identifying objects is less than "N2".

In this manner, the display mode of content information associated with the identifying objects is decided corresponding to a distribution state of the identifying objects in the imaging region.

### [Display content of HMD]

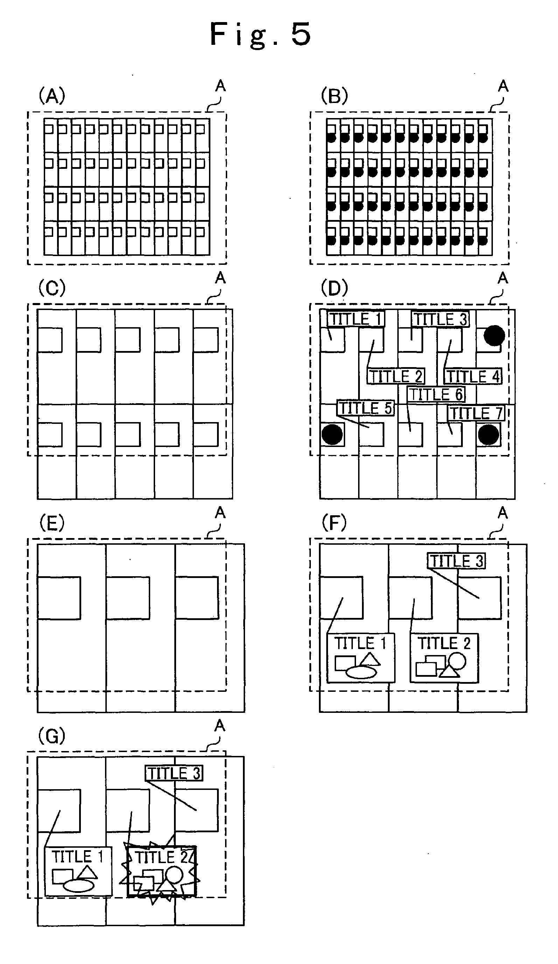

Display contents and the like in the HMD 1 according to this embodiment are explained in conjunction with Fig. 5.

Here considered is one example where a viewer P who wears the HMD 1 on his/her head looks for rental articles in a place such as a rental store. As shown in Fig. 5A, various kinds of rental articles are arranged on shelves in the rental store. A region which constitutes a portion of a visual field range of the viewer P is set as an imaging region A.

In such a state, when 48 pieces of identifying objects are detected within the imaging region A as shown in Fig. 5A, black dots are displayed in association with the identifying objects as content information which respectively corresponds to all identifying objects within the imaging region A as shown in Fig. 5B. Due to such a display, locations to which the identifying objects are given can be recognized so that the number of rental articles can be roughly recognized.

Then, when the viewer P approaches the rental articles, 10 pieces of identifying objects are detected within the imaging region A as shown in Fig. 5C. In this case, as shown in Fig. 5D, as content information which corresponds to the respective identifying object within the imaging region A, titles and dots are displayed in association with the identifying objects. To be more specific, that is, the titles are displayed in association with 7 pieces of identifying objects, and the dots are displayed in association with 3 pieces of identifying objects. Due to such a display, the titles of the rental articles to which the identifying objects are given can be recognized so that kinds of rental articles can be roughly recognized. Further, although explained in detail later, whether the titles or dots are to be displayed is decided depending on whether the title or the dot overlaps with the identifying object per se or other content information.

Then, when the viewer P further approaches the rental articles, as shown in Fig. 5E, 3 pieces of identifying objects are detected within the imaging region A. In this case, as shown in Fig. 5F, as content information which respectively corresponds to all identifying objects within the imaging region A, the images and titles are displayed in association with the identifying objects. To be more specific, 2 still images are displayed in association with 2 pieces of identifying objects, and a title is displayed in association with 1 piece of identifying objects. Due to such a display, the viewer P can recognize images associated with the rental articles to which the identifying objects are given and hence, the viewer P can roughly recognize contents of the rental articles. Although explained in detail later, whether the images or titles are displayed is decided depending on whether the image or the title overlaps with the identifying objects per se or other content information.

Further, when the still image is designated in response to an operation of an operation switch 7 in a state shown in Fig. 5F, the designated still image is displayed as a moving image as shown in Fig. 5G.

In this manner, corresponding to the number of identifying objects within the imaging region A, the display mode of the content information which corresponds to the identifying objects is displayed as any one of dots, titles and images. Further, still images and moving images are selectable corresponding to an operation of the operation switch 7.

### [Control operation]

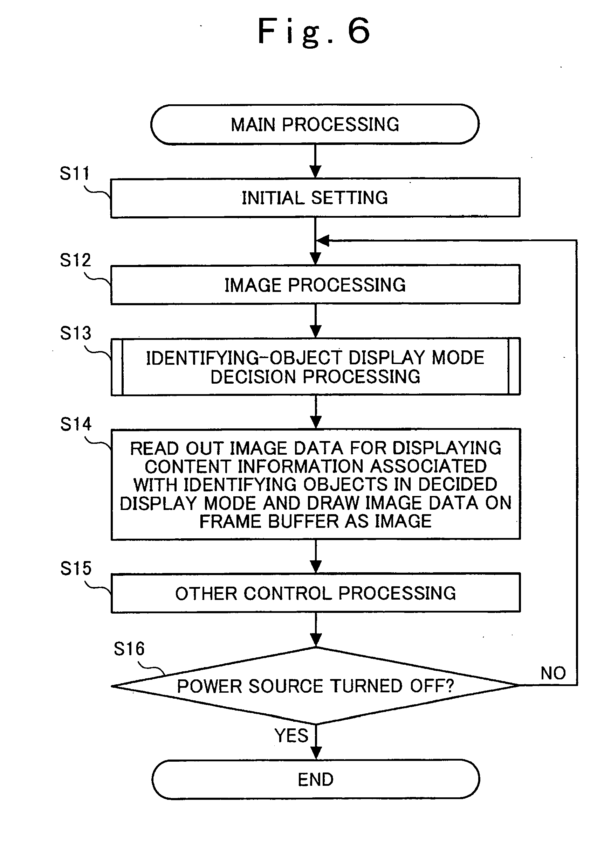

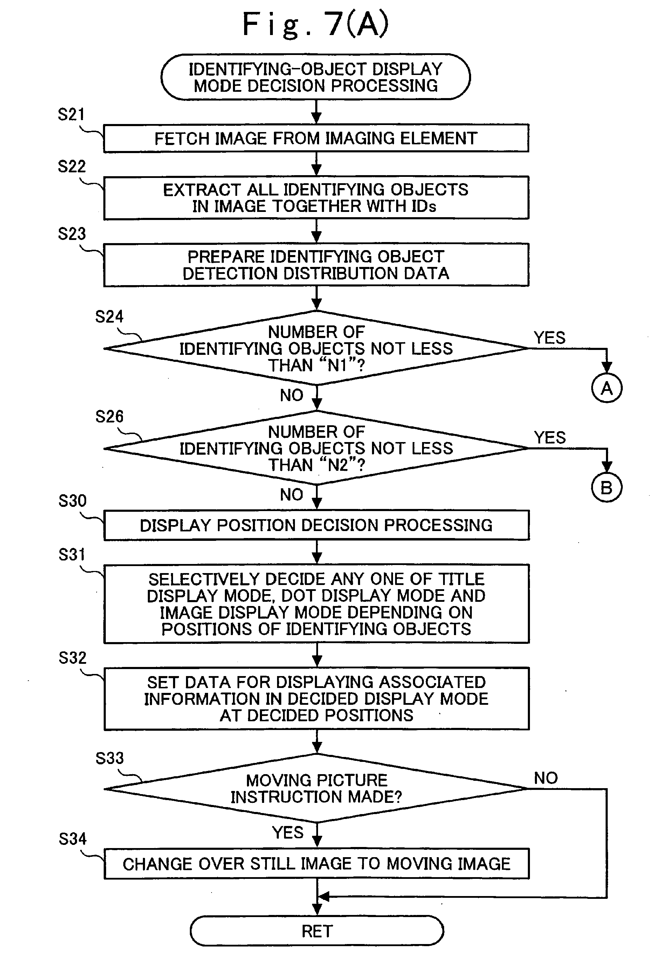

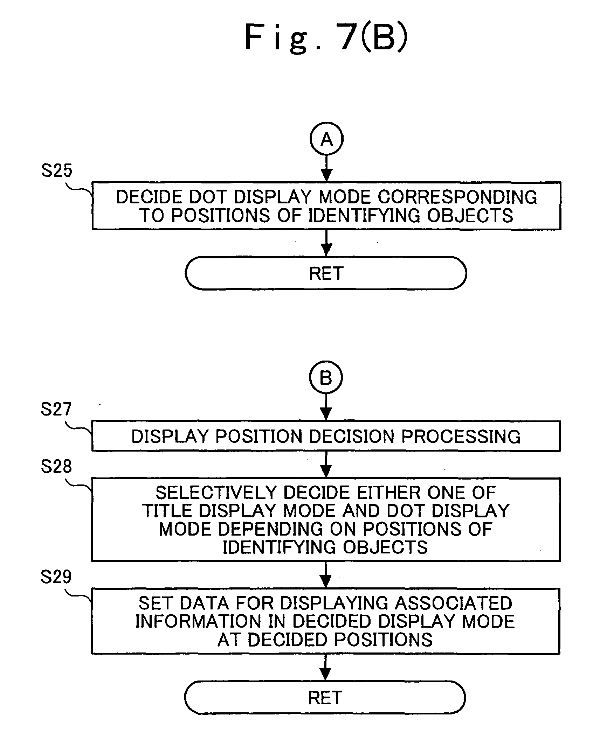

Next, the manner of operation of the HMD 1 is explained in conjunction with flow charts shown in Fig. 6 and Fig. 7. Particularly, main processing shown in Fig. 6 is executed by the control part 110 when a power source of the HMD 1 is turned on. Here, the main processing executed by the control part 110 of the HMD 1 (hereinafter, simply referred to as "control part 110") is explained, and the explanation of other processing is omitted.

In the HMD 1 of this embodiment, the control part 110, by executing the information processing program stored in the flash memory 102, functions as the identifying object detection unit 203, the distribution density calculation unit 204, the distribution state determination unit 205, the display mode decision unit 206, the display position decision unit 207, the display control unit 208 and the like.

### [Main processing]

First of all, as shown in Fig. 6, when a power source is supplied to the HMD 1, the control part 110 performs initial setting (step S11). In this processing, the control part 110 executes the permission of access to a RAM, initializing of a work area and the like. When this processing is finished, the control part advances to processing in step S12.

In step S12, the control part 110 executes image processing. In this processing, the control part 110 performs a control so as to allow the CCD sensor 2 which constitutes the imaging unit 201 to photograph an image of the imaging region A. When this processing is finished, the control part 110 advances to processing in step S13.

In step S13, the control part 110 executes identifying-object display mode decision processing. Although explained in detail later in conjunction with Fig. 7, in this processing, the control part 110 detects the identifying objects from an image in the imaging region photographed by the CCD sensor 2 and, thereafter, based on the number of the identifying objects, decides a display mode of content information which is associated with the respective identifying objects by the display unit 209 among plural kinds of display modes. When this processing is finished, the control part 110 advances to processing in step S 14.

In step S 14, the control part 110 reads out image data for displaying the content information which corresponds to the detected identifying objects in a decided display mode from the flash memory, and draws the image data on a frame buffer in a VRAM 105 as an image. Due to such processing, the control part 110 supplies the image drawn on the frame buffer to the optical scanning part 10 so that the image is displayed in a state that the viewer P can observe the image. That is, the control part 110 performs a control which displays content information associated with the identifying objects in association with the identifying objects in a display mode decided in step S13. Further, the display unit 209, as shown in Fig. 5B, displays content information associated with the identifying objects such that the content information can be associated with the identifying objects within a visual field range which can be observed in a see-through manner. That is, the control part 110 performs a control of displaying content information which corresponds to the respective identifying objects in a decided display mode in association with the identifying objects which can be observed by the viewer in a see-through manner through the display unit 209. By executing such processing, the control part 110 also functions as the display control unit 208. Even when the associated information which corresponds to the selected identifying object is a moving image content, the control part 110 draws the associated information which corresponds to the identifying object as an image on the frame buffer for every predetermined cycle. When this processing is finished, the control part 110 advances to processing in step S 15.

In step S15, the control part 110 executes other control processing. Then, the control part 110 determines whether or not a power source is turned off (step S16). In this processing, the control part 110 determines whether or not the power source is turned off in response to the presence of an operation of the power source switch SW or the like. When the control part 110 determines that the power source is turned off (step S16: YES), the control part 110 finishes the main processing. On the other hand, when the control part 110 determines that the power source is not turned off (step S16: NO), the control part 110 again returns to processing in step S12. Accordingly, the control part 110 repeatedly executes processing in step S12 to step S15 until the power source is turned off.

### [Identifying-object display mode decision processing]

A subroutine executed in step S13 shown in Fig. 6 is explained in conjunction with Fig. 7.

First of all, as shown in Fig. 7, the control part 110 fetches an image from an imaging element (step S21). In this processing, the control part 110 fetches an image within the imaging region A photographed by the CCD sensor 2 which constitutes the imaging unit 201, and stores the image in the RAM 103. When this processing is finished, the control part 110 advances to processing in step S22.

In step S22, the control part 110 extracts all identifying objects in the image together with IDs. In this processing, the control part 110 detects the identifying objects from the image within the imaging region A fetched in step S21. Then, the control part 110, when the identifying objects are detected, reads out the IDs contained in the detected identifying objects. Accordingly, the control part 110 can recognize or identify kinds of respective identifying objects. By executing such processing, the control part 110 functions as the identifying object detection unit 203. When this processing is finished, the control part 110 advances to processing in step S23.

In step S23, the control part 110 prepares identifying object detection distribution data. In this processing, the control part counts the number of identifying objects detected in step S22. Due to such processing, the control part 110 can recognize distribution data of identifying objects within the whole imaging region A. That is, the control part 110 can calculate the distribution density of identifying objects within the imaging region A detected by the identifying object detection unit 203. By executing such processing, the control part 110 functions as the distribution density calculation unit 204. When this processing is finished, the control part 110 advances to processing in step S24.

In step S24, the control part 110 determines whether or not the number of identifying objects detected within the imaging region A is not less than "N1". That is, the control part 110 determines a distribution state of identifying objects within the imaging region A detected by the identifying object detection unit 203. By executing such processing, the control part 110 functions as the distribution state determination unit 205.

In this processing, when the control part 110 determines that the number of identifying objects detected within the imaging region A is not less than "N1" (step S24: Yes), the control part 110 decides the dot display mode in which the dots are displayed at positions of the identifying objects (step S25) and this subroutine is fmished.

On the other hand, when the control part 110 determines that the number of identifying objects detected within the imaging region A is less than "N1" (step S24: No), the control part 110 determines whether or not the number of identifying objects detected within the imaging region A is not less than "N2" (step S26). That is, the control part 110 determines a distribution state of the identifying objects within the detected imaging region A detected by the identifying object detection unit 203. By executing such processing, the control part 110 functions as the distribution state determination unit 205.

In this processing, when the control part 110 determines that the number of identifying objects is not less than "N2" (step S26: YES), the control part 110 advances to processing in step S27. On the other hand, when the control part 110 determines that the number of identifying objects is less than "N2" (step S26: NO), the control part 110 advances to processing in step S30.

In step S27, the control part 110 executes display position decision processing. Here, the control part 110 selectively decides either one of the title display mode and the dot display mode depending on the positions of the identifying objects (step S28), sets data for displaying content information in a decided display mode at decided display positions (step S29), and finishes this subroutine. In this processing, the control part 110 decides the display positions and the display mode in order from the identifying object near the center of the imaging region A (forming the center of a visual field range of the viewer P) which is used as the reference.

The control part 110 decides the positions where the content information is displayed with respect to the respective detected identifying objects. In this case, the control part 110 determines, by displaying the content information in the vicinity of the identifying objects in a title display mode, whether or not there are spaces where the content information does not overlap with the identifying objects or other content information. When there are such spaces, the control part 110 decides such positions as display positions where the content information associated with the identifying objects is displayed and decides the display mode as a title display mode. On the other hand, when there is no space, the control part 110 decides the positions of the identifying objects as the display positions, and decides the display mode as a dot display mode.

To be more specific, as shown in Fig. 5D, when titles (title 1 to title 7) do not overlap with the identifying objects or other content information in displaying the titles using the center of the imaging region A as the reference, the control part 110 decides a title display mode as the display mode. On the other hand, when the title overlaps with the identifying object or other content information in displaying the title, the control part 110 decides a dot display mode as the display mode. That is, the control part 110, with respect to the identifying objects detected by the identifying object detection unit 203, decides a display mode of the identifying object in a region near the center of a visual field range of the viewer P as a relatively easily viewable display mode (for example, a title display mode).

In step S30, the control part 110 executes display position decision processing. Here, the control part 110 selectively decides any one of the image display mode, the title display mode and the dot display mode depending on the positions of the identifying objects (step S31), sets data for displaying content information (associated information) in the decided display mode at the decided display positions (step S32), and advances to processing in step S33. In this processing, the control part 110 decides the display positions and the display mode in order from the identifying object near the center of the imaging region A which is used as the reference.

The control part 110 decides the positions where the content information is displayed with respect to the respective detected identifying objects. In this case, the control part 110 determines, by displaying the content information in the vicinity of the identifying objects in an image display mode, whether or not there are spaces where the content information does not overlap with the identifying objects or other content information. When there are such spaces, the control part 110 decides such positions as display positions where the content information associated with the identifying objects is displayed and decides the display mode as an image display mode. On the other hand, when there is no space, the control part 110 determines, by displaying content information in the vicinity of the identifying objects in a title display mode, whether or not there are spaces where the content information does not overlap with the identifying objects or other content information. When there are such spaces, the control part 110 decides such positions as display positions where the content information associated with the identifying objects is displayed and decides the display mode as a title display mode. On the other hand, when there is no space, the control part 110 decides the positions of the identifying objects as the display positions, and decides the display mode as a dot display mode.

To be more specific, as shown in Fig. 5F, when image does not overlap with the identifying object or other content information in displaying the image using the center of the imaging region A as the reference (title 1, title 2), the control part 110 decides an image display mode as the display mode. On the other hand, when the image overlaps with the identifying object or other content information in displaying the image, and the title does not overlap with the identifying object or other content information in displaying the title (title 3), the control part 110 decides a title display mode as the display mode. That is, the control part 110, with respect to the identifying objects detected by the identifying object detection unit 203, decides a display mode of the identifying objects in a region near the center of a visual field range of the viewer P as a relatively easily viewable display mode (for example, an image display mode).

In step S33, the control part 110 determines whether or not a moving picture instruction is made. In this processing, the control part 110 determines whether or not the moving image instruction is made in response to an operation instruction using the operation switch 7. When the control part 110 determines that the moving image instruction is made (step S33: YES), a still image is changed over to a moving image as content information (step S34), and this subroutine is finished. On the other hand, when the control part 110 determines that the moving image instruction is not made (step S33: NO), this subroutine is finished without executing processing in step S34.

In this manner, the control part 110, corresponding to a distribution state of the identifying objects determined by the distribution state determination unit 205, decides a display mode of content information associated with the respective identifying objects based on any one of patterns, characters, images (still images, moving images). In other words, the control part 110 determines the display mode of the content information associated with the respective identifying objects based on the distribution density of the identifying objects calculated by the distribution density calculation unit 204. By executing such processing, the control part 110 functions as the display mode decision unit 206.

In this manner, the control part 110 performs the control in which the control part 110 calculates the distribution density of identifying objects within the detected imaging region, determines the distribution state of the identifying objects, decides the display mode of content information associated with the respective identifying objects depending on the distribution state of the identifying objects, and displays content information which is associated with the identifying objects in a decided display mode in association with the identifying objects observed by the viewer P through the display unit 209. Accordingly, the display mode of the content information is determined based on the distribution state of the identifying objects and hence, overlapping of the display of content information can be prevented whereby even when a large number of identifying objects are detected, it is possible to display necessary and sufficient display information in an easily viewable manner.

Further, out of the detected identifying objects, the display mode of the identifying objects in a region near the center of the visual field range of the viewer is decided as the relatively easily viewable display mode. Accordingly, it is possible to select the display mode of the content information by taking the visual field range of the viewer into consideration.

Further, such a subroutine is called at a predetermined cycle and hence, when the displacement of an identifying object is detected due to the movement of the viewer P or the identifying object per se, the display mode of the content information associated with the identifying object is decided based on the positional distribution of identifying object within the imaging region A detected after such displacement. Accordingly, even when the identifying object is displaced, after such displacement, the content information and the display mode of the content information after the displacement are readily changed and hence, the control is facilitated.

### [Other embodiments]

In the above-mentioned embodiment, the display mode and the display positions are determined based on whether or not the title or the image overlaps with the identifying object or other content information on a condition that the titles in the title display mode adopt a uniform display size and the images in the image display mode adopt a uniform display size. However, the present invention is not limited to such processing. For example, without setting the display size of the titles in the title display mode or the display size of the images in the image display mode uniform, the titles or the images may be displayed with variable display sizes. To be more specific, the image size may be contracted without changing an aspect ratio. Due to such processing, the display mode decision unit 206 decides the display mode with the display size of the content information associated with the identifying objects corresponding to a distribution state of the detected identifying objects. Accordingly, even among the same content information, it is possible to change the display modes of the content information by changing the display sizes of the content information and hence, even when a large number of identifying objects are detected, it is possible to display necessary and sufficient display information in an easily viewable manner.

Further, in the above-mentioned embodiment, the display mode of the content information is decided irrespective of kinds of detected identifying objects. However, the present invention is not limited to such processing. For example, the display mode of the content information may be decided depending on kinds of detected identifying objects. To be more specific, when the kind of identifying objects is CD or DVD, any one of a pattern, a character, a still image and a moving image is decided as the display mode of the content information. However, when the kind of identifying objects is book, any one of a pattern, a character and a still image may be decided as the display mode of content information. That is, the display mode decision unit 206 decides the display mode of the content information associated with the identifying object based on the kind of the detected identifying object. Accordingly, it is possible to decide the display mode of content information associated with the kind of identifying object thus facilitating the control of the display device.

Further, in the above-mentioned embodiment, when the displacement of the identifying objects is detected, based on the positional distribution of the identifying objects within the imaging region A detected after such displacement, the display mode of the content information associated with the identifying objects is decided. However, the present invention is not limited to such processing. For example, when the displacement of the identifying objects is detected, the display mode immediately before the displacement may be maintained for a predetermined time. Due to such processing, until a predetermined time elapses from a point of time of the displacement of the identifying object, the display mode of the content information is maintained. Accordingly, the display mode of the content information is not frequently changed thus suppressing cumbersomeness brought about by the frequent change.

Further, in the above-mentioned embodiment, the display positions of the content information are set near and around the identifying object. However, the present invention is not limited to such arrangement. For example, provided that the content information and the identifying object are associated with each other, the display positions of the content information may not be arranged around the identifying object. Further, for example, even when the display positions of the content information are near and around the identifying object, the display positions of the content information may be decided based on the positional relationship with other identifying objects.

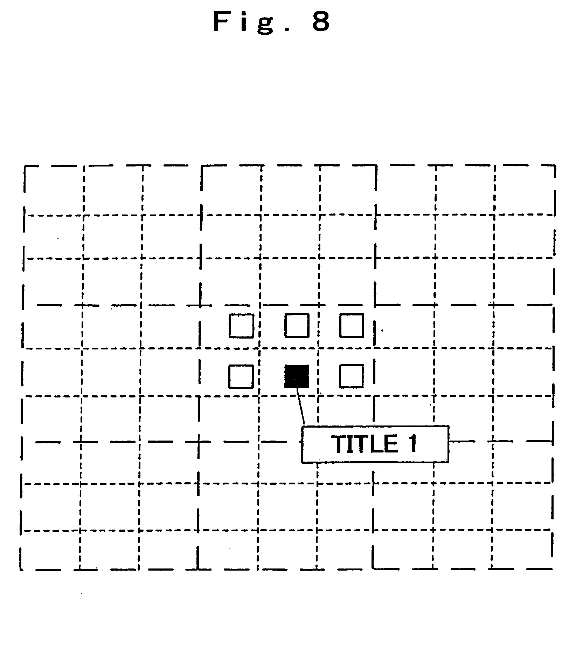

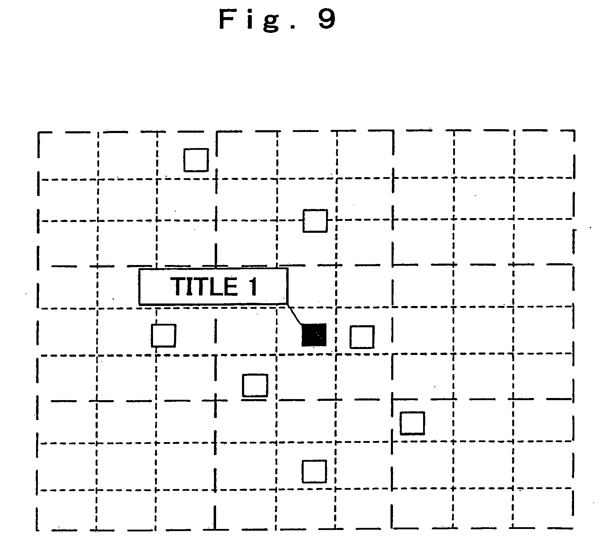

One specific example is explained hereinafter in conjunction with Fig. 8 and Fig. 9.

As shown in Fig. 8, around an identifying object expressed in a black square shape (hereinafter referred to as "focusing identifying object"), that is, above the focusing identifying object, on an upper right side of the focusing identifying object, on a right side of the focusing identifying object, on a left side of the focusing identifying object, and on an upper left side of the focusing identifying object, other identifying objects are detected. In this case, around the focusing identifying object, the distribution density of identifying objects below the focusing identifying object, on a lower right side of the focusing identifying object, and on a lower left side of the focusing identifying object is set lower than the distribution density of the identifying objects above the focusing identifying object, on an upper right side of the focusing identifying object, on a right side of the focusing identifying object, on a left side of the focusing identifying object, and on an upper left side of the focusing identifying object. Accordingly, the display position decision unit 207 decides positions below the focusing identifying object, on a lower right side, and on a lower left side as display positions of the content information.

That is, the display position decision unit 207 decides positions around the focusing identifying object detected by the identifying object detection unit 203 and where the distribution density of identifying objects calculated by the distribution density calculation unit 204 is relatively low as positions where the content information which is associated with the respective identifying objects is displayed. Accordingly, it is possible to prevent the identifying objects and the content information from overlapping with each other and hence, even when a large number of identifying images are detected, it is possible to display content information in an easily viewable manner.

Further, as shown in Fig. 9, around an identifying object expressed by a black square shape (hereinafter referred to as "focusing identifying object"), other identifying objects are detected. In this case, around the focusing identifying object, a distance between the focusing identifying object and the identifying object on an upper left side is remotest. Accordingly, the display position decision unit 207 decides a position on an upper left side of the focusing identifying object as a display position of content information.

That is, the display position decision unit 207 decides a position between the focusing identifying object and another identifying object remotest from the focusing identifying object in distance around the focusing identifying object detected by the identifying object detection unit 203 as a position where the associated information associated with the identifying object is displayed. Accordingly, it is possible to prevent the identifying object and the content information from overlapping with each other and hence, even when a large number of identifying images are detected, it is possible to display content information in an easily viewable manner.

Further, in the above-mentioned embodiment, various kinds of operation instructions are made in response to an operation of the operation switch 7 mounted on the HMD 1 per se. However, the present invention is not limited to such operations. For example, a laser marker is used as an operation unit, and various kinds of settings and decisions may be made based on whether or not laser beams are radiated.

To be more specific, as shown in Fig. 5G, by designating a still image using a laser marker, for example, a laser beam spot is recognized from an image photographed in the imaging region A, and the designated still image may be changed over to a moving image.

In this manner, laser beams can be radiated toward the identifying object by the viewer, and the still image is changed over to the moving image in response to the radiated laser beams. Accordingly, it is possible to change over the still image to the moving image without directly connecting an operation unit to the HMD and hence, the operation is facilitated. Further, since the identifying object can be directly designated by the radiation of laser beams, the operation is facilitated also from this viewpoint.

Further, in the above-mentioned embodiment, the HMD 1 per se executes various processing. However, the present invention is not limited to such a constitution. For example, the HMD 1 may perform various processing through communication via network.

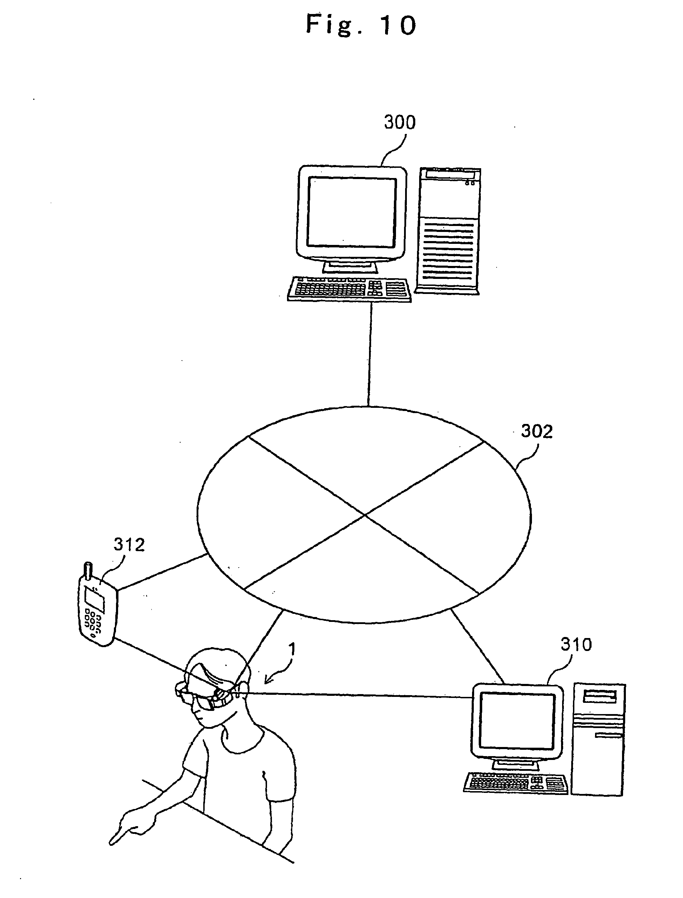

As a specific example, as shown in Fig. 10, an HMD 1, a server 300, a personal computer 310 and a portable terminal apparatus 312 are connected to a network 302 such that these apparatuses are communicable with each other. In this case, for example, content information, kinds of content information and the like are stored in the server 300, and such information may be acquired through the communications between the HMD 1 and the server 300 at predetermined timing. Further, these communications may be performed via the personal computer 310 and the portable terminal apparatus 312.

In the above-mentioned embodiment, the operation switch 7 and the like are mounted on the HMD 1, and HMD 1 per se performs various kinds of processing by itself in response to the operation of the operation switch 7. However, the present invention is not limited to such processing. For example, as shown in Fig. 10, the HMD 1, the personal computer 310 and the portable terminal apparatus 312 may be connected with each other so as to enable the mutual communication thus supplying operation signals to the HMD 1 from the personal computer 310 or the portable terminal apparatus 312.

## Claims

1. A see-through-type head mount display comprising:
a display unit which is configured to project an image light corresponding to display information on an eye of a viewer thus allowing the viewer to visually recognize an image corresponding to the image light while allowing an external light to pass therethrough;
an imaging unit which is configured to photograph at least a portion of a visual field range of the viewer;
an identifying object detection unit which is configured to detect identifying objects within an imaging region formed by the imaging unit;
an associated information memory unit which is configured to store associated information associated with the respective identifying objects;
a distribution state determination unit which is configured to determine a distribution state of the identifying objects within the imaging region which are detected by the identifying object detection unit;
a display mode decision unit which is configured to decide a display mode of the associated information associated with the respective identifying objects corresponding to the distribution state of the identifying objects determined by the distribution state determination unit; and
a display control unit which is configured to perform a control in which the associated information associated with the identifying objects are displayed by the display unit in association with the identifying objects viewable by the viewer through the display unit in the display mode decided by the display mode decision unit.

2. A head mount display according to claim 1, wherein the head mount display further comprises a distribution density calculation unit which is configured to calculate distribution density of identifying objects within the imaging region detected by the identifying object detection unit, and the display mode decision unit decides the display mode of the associated information associated with the respective identifying objects based on the distribution density of the identifying objects calculated by the distribution density calculation unit.

3. A head mount display according to claim 2, wherein the head mount display further comprises a display position decision unit which is configured to decide, around identifying objects detected by the identifying object detection unit, a position where the distribution density of the identifying objects calculated by the distribution density calculation unit is relatively low as a position for displaying the associated information associated with the respective identifying objects.

4. A head mount display according to claim 1, wherein the head mount display includes a display position decision unit which is configured to decide, around identifying objects detected by the identifying object detection unit, a position between the identifying object and another identifying object remotest from the identifying object as a position for displaying the associated information associated with the identifying object.

5. A head mount display according to any one of claims 1 to 4, wherein the display mode decision unit decides any one of a pattern, a character, a still image and a moving image indicative of the associated information associated with the identifying object as a display mode corresponding to the distribution state of the identifying objects.

6. A head mount display according to any one of claims 1 to 5, wherein the display mode decision decides a display size of the associated information associated with the identifying object as the display mode corresponding to the distribution state of the identifying objects.

7. A head mount display according to any one of claims 1 to 6, wherein the display mode decision unit decides a display mode of the associated information associated with the identifying object based on a kind of the identifying objects detected by the identifying object detection unit.

8. A head mount display according to any one of claims 1 to 7, wherein the display mode decision unit decides a display mode of identifying objects present in a region near the center of a visual field range of the viewer out of the identifying objects detected by the identifying object detection unit as a relatively easily viewable display mode.

9. A head mount display according to any one of claims 1 to 8, wherein the display mode decision unit, when displacement of identifying objects are detected by the identifying object detection unit, maintains a display mode immediately before displacement for a predetermined time.

10. A head mount display according to any one of claims 1 to 8, wherein the display mode decision unit, when displacement of identifying objects are detected by the identifying object detection unit, decides a display mode of associated information associated with the identifying object based on the positional distribution of the identifying objects within the imaging region detected after the displacement.
